Europäisches Patentamt

European Patent Office

Office européen des brevets

(11) Publication number: **0 067 012 B1**

(12) **EUROPEAN PATENT SPECIFICATION**

(45) Date of publication of patent specification: **04.02.87**

(51) Int. Cl.⁴: **A 01 K 45/00, E 01 H 1/04**

(21) Application number: **82302727.1**

(22) Date of filing: **27.05.82**

(54) **Collecting apparatus primarily for catching and elevating, for example, live birds in a deep litter or open house situation.**

(30) Priority: **28.05.81 GB 8116347**

(43) Date of publication of application:
**15.12.82 Bulletin 82/50**

(45) Publication of the grant of the patent:
**04.02.87 Bulletin 87/06**

(84) Designated Contracting States:
**AT BE CH DE FR GB IT LI LU NL SE**

(56) References cited:
**FR-A-2 411 106**
**US-A-3 476 089**
**US-A-3 672 335**

(73) Proprietor: **TAMNAHARRY DEVELOPMENTS LIMITED**
**Tamnaharry House**
**Warrenpoint County Down BT35 3QX Northern Ireland (GB)**

(72) Inventor: **O'Neill, James John**
**Tamnaharry House Warrenpoint**
**County Down, BT34 3Qx Northern Ireland (GB)**
Inventor: **Treanor, John Peter Gerald**
**27 Fathom Park Dromalane Road**
**Newry County Down Northern Ireland (GB)**
Inventor: **McGivern, Gerald Peter**
**42 Grinan Lough Road**
**Newry County Down Northern Ireland (GB)**

(74) Representative: **Arthur, John William et al**
**FITZPATRICKS 4 West Regent Street**
**Glasgow G2 1RS Scotland (GB)**

Courier Press, Leamington Spa, England.

## Description

This invention relates to collecting apparatus primarily for catching and elevating live birds such as broilers, pullets, turkeys, and other poultry or game birds being bred in a deep litter or open house situation as the initial step in a series of steps, for example in preparing the birds for human consumption. The apparatus can be, for use, also in catching or picking-up and elevating rubbish from a rubbish-strewn area of land as the initial step in a series of steps in cleaning said land area. The purpose in the invention in respect of animate objects, such as chickens, is to collect them mechanically with as minimal an amount of damage or bruising to the chickens as possible.

FR—A—2 411 106 discloses a collecting apparatus for catching and elevating animate objects comprising a mobile supporting framework mounting, two elongate members 11 and 15 adapted to be driven counter to one another and disposed with their axes parallel to one another and, in use, to a supporting surface across which the framework is intended to be moved, the members defining therebetween a passage at the lower end of which objects are caught and along which the caught objects are elevated in use of the apparatus, and means 12, 17 outstanding from around the members, the means 17 on one member 15 being less in length than the passage is deep.

US—A—3 672 335 discloses in Figs. 9 and 10 collecting apparatus for catching and elevating animate objects comprising a mobile supporting framework mounting, two elongate members 230 or 240 respectively with member 112' adapted to be driven counter to one another and disposed with their axes parallel to one another and, in use, to a supporting surface across which the framework is intended to be moved, the members defining therebetween a passage at the lower end of which objects are caught and along which the caught objects are elevated in use of the apparatus and means 232 or 246 outstanding from around the member 230 or 240, the means being less in length than the passage is deep.

According to the present invention, collecting apparatus for catching and elevating animate or inanimate objects comprises a mobile supporting framework mounting two elongate members adapted to be driven counter to one another and disposed with their axes parallel to one another and in use parallel to a supporting surface across which the framework is intended to be moved, the members defining therebetween a passage at the lower end of which objects are to be caught and along which the caught objects are elevated in use of the apparatus, that elongate member of the two that is rearward with reference to the direction in which the framework is intended to be moved being nearer ground level than the other elongate member such that the ground clearance at said other member enables passage of an object therebelow while that at the rear member prevents such passage, and deformable resilient means of a depth less than the width of the passage stand out from around the forward member and rear member ensuring that the resilient means on the rear member in co-operation with the resilient means on the forward member sweep the object or objects into the passage between the members and elevates the object or objects for discharge to the next step in a series of steps characterised in that the rear member is the lower terminal roller of a conveyor and the resilient means stand out from the surface of the conveyor passing around the roller (14).

Preferably, rotary brushes are provided on each lateral side of the framework for sweeping objects towards the members.

Preferably also, the brushes are each rotated about a vertical shaft driven by a motor and both counter-rotate relative to each other.

The resilient means may be elements in the form of strips of deformable resilient foamed material or rows of spaced resilient bristles arranged longitudinally of the rollers or transversely of the conveyors, or may be a jacket of foamed material provided around the rollers or the conveyors.

Embodiments of the present invention will now be described, by way of example, with reference to the accompanying drawings, in which:

Fig. 1 is a diagrammatic plan view of a preferred collecting apparatus according to a first embodiment of the present invention and in which two conveyors are provided with upwardly-directed runs;

Fig. 2 is a diagrammatic side view of the apparatus shown in Fig. 1;

Fig. 3 is a sectional view on the line III—III of Fig. 1;

Fig. 4 is a schematic view similar to Fig. 3 and showing the runs of the conveyors being upwardly-inclined; and

Figs. 5 and 6 are schematic views similar to Fig. 3 and showing different dispositions of rotatable members according to second, and third embodiments respectively of the present invention.

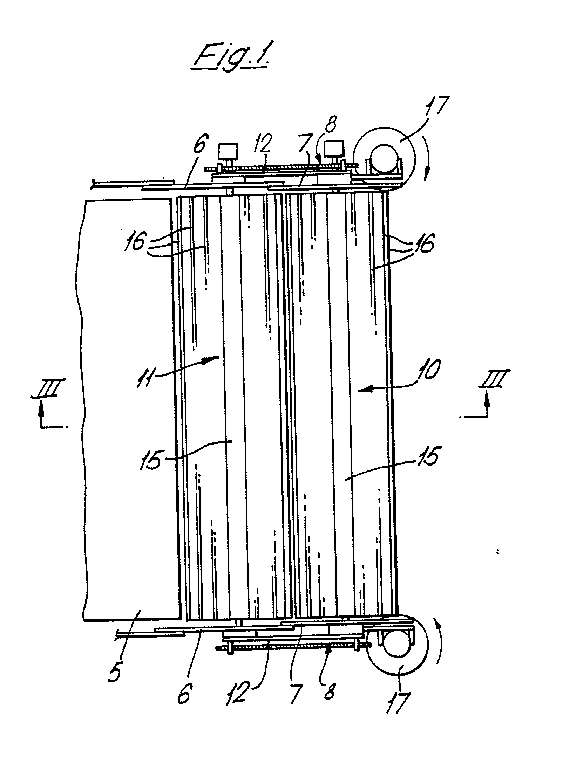

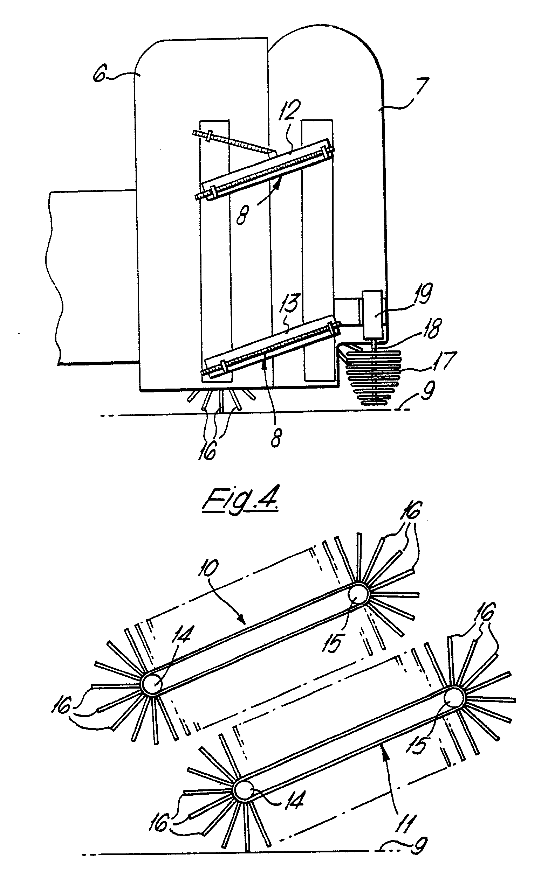

Referring to the first embodiment as shown in Figs. 1 to 3 of the drawings, collecting apparatus primarily for catching and elevating live birds comprises a mobile supporting framework mounting two elongate rotatable members whose axes are parallel, and to be, in use, substantially parallel to a supporting surface 9 across which the framework is intended to be moved. The members are formed by lower terminal rollers of two endless conveyors 10 and 11. Sides 6, 7 and arms 12 and 13 of the framework are shown in the drawings. The supporting framework may be incorporated into a self-propelled vehicle or may be an attachment for fitting to a self-propelled vehicle. The conveyors 10, 11 are chain-driven and adapted to be driven counter to one another and are of slat or belt type arranged in a series of strips spaced lengthwise of the lower and upper terminal rollers 14, 15. The conveyors 10, 11 are disposed on said arms 12, 13 with upwardly-directed runs spaced and parallel to one another and defining therebetween a passage at the lower end of which birds are intended to be caught and along which caught birds are elevated in use of the apparatus. Screw-adjustment to increase or decrease the depth of the passage is shown at 8.

The lower terminal roller 14 of the rearward conveyor 11 with reference to the direction in which the framework is intended to be moved is nearer the supporting surface or ground level 9 than is the lower terminal roller 14 of the forward conveyor 10 which is spaced at a height above ground level sufficient to enable passage of a bird thereunder, as shown in the drawings, while at the rear conveyor 11 passage is prevented. The conveyors 10 and 11 are mounted on the arms 12, 13 to be spaced apart for example 25.6 cms (10 inches) with conveyor 10 spaced, for example about 17.8 cms (7 inches) above the ground, and conveyor 11 spaced for example about 10.2 cms (4 inches) above the ground 9.

The conveyors 10, 11 have outstanding from their endless surfaces resilient elements 16 lesser in length than the passage is deep.

Each element 16 comprises a strip of foamed-material transverse of the conveyor. To assist in directing or sweeping birds towards the conveyors 10, 11, two rotary brushes 17 each rotatable about a vertical shaft 18 and driven by motor 19, are provided one on each lateral side of the framework and driven in counter-rotation to each other and inwardly towards the conveyors 10, 11.

Means to drive said conveyors 10, 11 and motors 19 may be any convenient power source additional to or taken from the motive power of the vehicle.

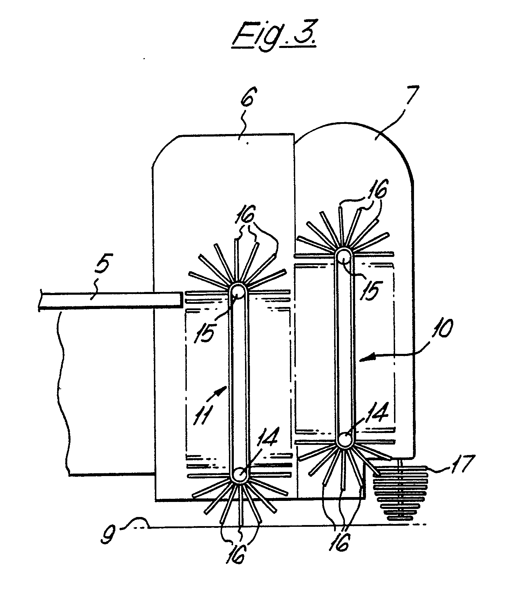

In use, with the arms 12, 13 of the support framework forwardly of the vehicle in the direction of movement and with the conveyors 10, 11 being driven, the vehicle is moved into the house containing the birds and towards the birds to be caught. The birds pass under the forward conveyor 10 and the directional flow of the elements 16 serves to sweep the bird or birds clear of the ground, and thence, being held firmly by the elements in co-operation, are elevated up the passage to the upper end thereof for discharge to the next step of the series of steps, and a conveyor 5 is shown in Fig. 3 for this purpose.

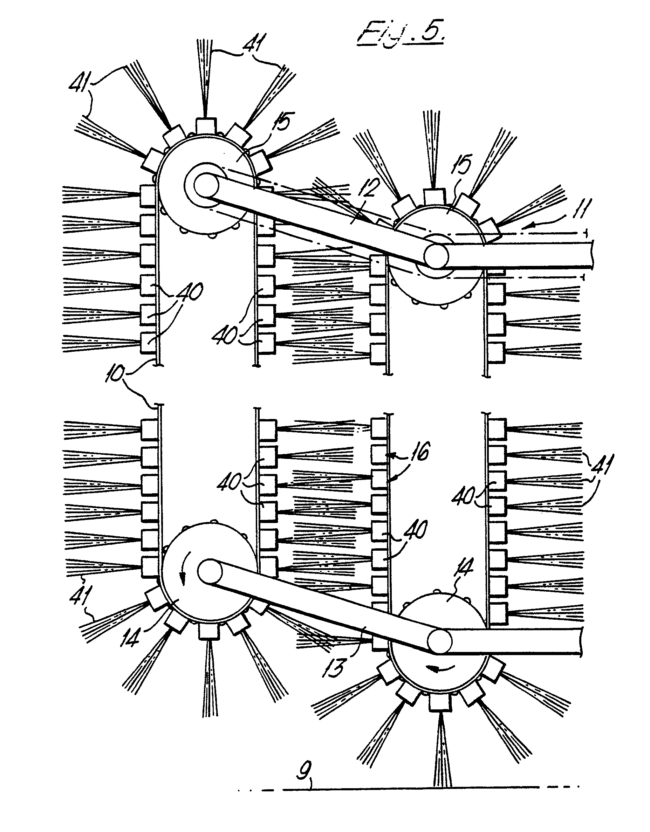

In a modification, the conveyors 10, 11 have upwardly-inclined runs as shown in Fig. 4.

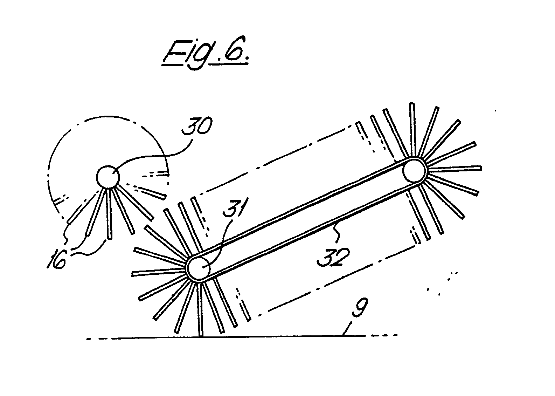

In a second embodiment as shown in Fig. 5 in which like numerals denote like parts, each conveyor 10, 11 has rows of elements in the form of mountings 40 having monofilaments 41 outstanding therefrom.

In a third embodiment as shown in Fig. 6, two rollers 30, 31 are provided, roller 30 being provided with outstanding resilient elements and roller 31 being similar to the rearward lower terminal roller 14, with conveyor 32 being arranged therearound.

The resilient elements almost meet at the midway line of the passage as shown in the drawings apart from Fig. 5 which shows the elements overlapping.

The apparatus described in the second and third embodiments is used in the same manner as the apparatus described in the first embodiment.

In a modification of each embodiment, the elements 16 of one or both rollers or conveyors may be replaced by a jacket of foamed material whose depth is the same as the length of the elements except as shown in Fig. 5 in which case the depth is approximately equal to half the width of the passage.

It has been found in a test that catching and elevating live birds is possible without damaging or bruising to the birds, or at the least, limit such bruising or damaging to a negligible or at most an acceptable level. An essential requirement for this is the co-operation between the means on both members and the provision that the rearward member is in the form of a conveyor.

While the collecting apparatus as described above has been primarily developed for use with live birds, it can within the scope of the present invention be used also for collecting inaminate objects, such as rubbish from a rubbish-strewn field after spectators have departed at the end of a sporting event or from a beach. The choice of elements used will be determined by the rubbish to be collected.

**Claims**

1. Collecting apparatus for catching and elevating animate or inaminate objects comprising a mobile supporting framework mounting two elongate members adapted to be driven counter to one another and disposed with their axes parallel to one another and in use parallel to a supporting surface across which the framwork is intended to be moved, the members defining therebetween a passage at the lower end of which objects are to be caught and along which the caught objects are elevated in use of the apparatus, that elongate member of the two that is rearward with reference to the direction in which the framework is intended to be moved being nearer ground level than the other elongate member such that the ground clearance at said other member enables passage of an object therebelow while that at the rear member prevents such passage, and deformable resilient means (16) of a depth less than the width of the passage stand out from around the forward member (10) and rear member (11) ensuring that the resilient means on the rear member (11) in co-operation with the resilient means on the forward member (10) sweep the object or objects into the passage between the members (10, 11) and elevates the object or objects for discharge to the next step in a series of steps characterised in that the rear member (11) is the lower terminal roller (14) of a conveyor and the resilient means stand out from the surface of the conveyor passing around the roller (14).

2. Apparatus as claimed in Claim 1, characterised in that rotary brushes (17) are provided on each lateral side of the framework for sweeping objects towards the members (10, 11).

3. Apparatus as claimed in Claim 2, characterised in that the brushes (17) are each rotated about a vertical shaft (18) driven by a motor (19) and both counter-rotate relative to each other.

4. Apparatus as claimed in Claim 1, 2 or 3, characterised in that the elongate forward member comprises a roller (30).

5. Apparatus as claimed in Claim 1, 2 or 3, characterised in that the elongate rotatable forward member is a lower terminal roller (14).

6. Apparatus as claimed in any one of the preceding Claims characterised in that the resilient means are elements (16) in the form of strips of foamed material.

7. Apparatus as claimed in any one of Claims 1 to 5, characterised in that the resilient means are in the form of rows of spaced bristles (41).

8. Apparatus as claimed in any one of Claims 1 to 5, characterised in that the resilient means is in the form of a jacket of foamed material.

9. A vehicle incorporating apparatus as claimed in any one of Claims 1 to 8.

**Patentansprüche**

1. Sammelvorrichtung zum Einfangen und Fördern von lebenden und leblosen Objekten, bestehend aus einem mobilen Traggerüst, zwei länglichen, gegensinnig antreibbaren, mit ihren Achsen parallel zueinander und parallel zu einer beim Einsatz zum Fortbewegen des Traggerüstes bestimmten Bodenfläche aneordneten Gliedern, die zwischen sich einen Durchgang bilden, an dessen unterem Ende die Objekte eingefangen und den entlang die eingefangenen Objekte beim Einsatz der Vorrichtung gefördert werden, wobei das bezüglich der Fortbewegungsrichtung des Traggerüstes hintere der beiden länglichen Glieder der Bodenfläche näher als das andere Glied ist, so daß die Bodenfreiheit dieses anderen Gliedes den Durchtritt eines Objektes darunter zuläßt, während das hintere Glied einen solchen Durchtritt verhindert, und aus von allen Seiten vom vorderen und vom hinteren Glied (10, 11) abstehenden, verformbaren, federnden und eine geringere Tiefe als die Weite des Durchganges aufweisenden Mitnehmern, von denen die des hinteren Gliedes (11) im Zusammenwirken mit den Mitnehmern des vorderen Gliedes (10) das Objekt oder die Objekte in den Durchgang zwischen den Gliedern (10, 11) kehren und zur Abgabe an einen nächsten Schritt einer Reihe von Behandlungsschritten weiterfördern, dadurch gekennzeichnet, daß das hintere Glied (11) die untere Umlenkrolle (14) eines Förderers ist und daß die federnden Mitnehmer von der Oberfläche des um die Umlenkrolle (14) geführten Förderers abstehen.

2. Vorrichtung nach Anspruch 1, dadurch gekennzeichnet, daß beidseits des Traggerüstes umlaufende Bürsten (17) zum Kehren der Objekte gegen die Glieder (10, 11) vorgesehen sind.

3. Vorrichtung nach Anspruch 2, dadurch gekennzeichnet, daß die Bürsten (17) jeweils um eine durch einen Motor (19) angetriebene, vertikale Welle (18) umlaufen und gegensinnig zueinander rotieren.

4. Vorrichtung nach einem der Ansprüche 1, 2 oder 3, dadurch gekennzeichnet, daß das vordere längliche Glied aus einer Rolle (30) besteht.

5. Vorrichtung nach einem der Ansprüche 1, 2 oder 3, dadurch gekennzeichnet, daß das vordere, drehbare, längliche Glied eine untere Umlenkrolle (14) ist.

6. Vorrichtung nach einem der vorhergehenden Ansprüche, dadurch gekennzeichnet, daß die federnden Mittel streifenförmige Elemente (16) aus geschäumtem Material sind.

7. Vorrichtung nach einem der Ansprüche 1 bis 5, dadurch gekennzeichnet, daß die federnden Mitnehmer durch Reihen von mit Zwischenraum angeordneten Borsten (41) gebildet sind.

8. Vorrichtung nach einem der Ansprüche 1 bis 5, dadurch gekennzeichnet, daß die federnden Mitnehmer durch einen Mantel aus geschäumtem Material gebildet sind.

9. Fahrzeug, das eine Vorrichtung nach einem der Ansprüche 1 bis 8 enthält.

**Revendications**

1. Appareil de captage, pour attraper et faire monter des objets animés ou inanimés, comprenant une carcasse de support mobile servant de monture à deux éléments allongés destinés à être entraînés en sens inverse l'un de l'autre et disposés de façon que leurs axes soient mutuellement parallèles, ces axes étant, en outre, parallèles, en cours d'utilisation, à une surface de support le long de laquelle la carcasse est destinée à se déplacer, les éléments allongés définissant entre eux un passage à l'extrémité inférieure duquel les objets doivent être attrapés et le long duquel les objets attrapés sont soulevés pendant le fonctionnement de l'appareil, l'élément allongé qui, parmi ces deux éléments, se trouve en arrière par rapport à la direction dans laquelle la carcasse doit se déplacer, étant plus proche du niveau du sol que l'autre élément allongé, de façon que la distance au sol de cet autre élément permette le passage d'un objet au-dessous de celui-ci, tandis que l'élément arrière empêche ce passage, et qu'un dispositif élastique déformable (16), de profondeur inférieure à la largeur du passage, fasse saillie autour de l'élément avant (10) et autour de l'élément arrière (11) pour s'assurer que le dispositif élastique situé sur l'élément arrière (11), en coopération avec le dispositif élastique situé sur l'élément avant (10), balaye l'objet ou les objets situés dans le passage entre les éléments (10, 11) et fasse monter l'objet ou les objets pour les décharger vers l'étape suivante d'une série d'étapes, appareil caractérisé en ce que l'élément arrière (11) est le rouleau terminal inférieur (14) d'un convoyeur, et en ce que le dispositif élastique fait saillie sur la surface du convoyeur passant autour du rouleau (14).

2. Appareil selon la revendication 1, caractérisé en ce que des brosses rotatives (17) sont prévues de chaque côté latéral de la carcasse pour balayer les objets vers les éléments (10, 11).

3. Appareil selon la revendication 2, caractérisé en ce que les brosses (17) sont entraînées chacune en rotation autour d'un arbre vertical (18) entraîné par un moteur (19), et en ce que ces deux brosses tournent en sens inverse l'une de l'autre.

4. Appareil selon l'une quelconque des revendications 1 à 3, caractérisé en ce que l'élément allongé avant est constitué par un rouleau (30).

5. Appareil selon l'une quelconque des revendications 1 à 3, caractérisé en ce que l'élément allongé rotatif avant est constitué par un rouleau terminal inférieur (14).

6. Appareil selon l'une quelconque des revendications précedentes, caractérisé en ce que les dispositifs élastiques sont des éléments (61) se présentant sous la forme de bandes de matériau en mousse.

7. Appareil selon l'une quelconque des revendications 1 à 5, caractérisé en ce que les dispositifs élastiques se présentent sous la forme de rangées de poils espacées (41).

8. Appareil selon l'une quelconque des revendications 1 à 5, caractérisé en ce que le dispositif élastique se présente sous la forme d'une chemise de matériau en mousse.

9. Véhicule incorporant l'appareil selon l'une quelconque des revendications 1 à 8.

_Fig.1_

Fig.4

# Fig.3.

_Fig.5._

Fig.6.